# EUROPÄISCHE PATENTSCHRIFT

(11) **EP 1 484 590 B1**
(45) Veröffentlichungstag und Bekanntmachung des Hinweises auf die Patenterteilung: **03.08.2011**
(21) Anmeldenummer: 04009768.5
(22) Anmeldetag: 24.04.2004
(51) Int. Cl.: G01L 19/14

(54) **Abdichtung eines Sensorelementes**
Sealing of a sensing element
Arrangement pour assurer l'étanchéité d'un élément de mesure

(30) Priorität: 02.06.2003 DE 10324818
(43) Veröffentlichungstag der Anmeldung: 08.12.2004
(73) Patentinhaber: VEGA Grieshaber KG, 77709 Wolfach (DE)
(72) Erfinder: Kopp, Thomas, 77709 Wolfach (DE)
(74) Vertreter: Patentanwälte Westphal, Mussgnug & Partner

(56) Entgegenhaltungen:
- DE-A1- 4 234 290
- DE-A1- 19 628 551
- DE-C1- 4 407 212

## Beschreibung

Die Erfindung bezieht sich auf einen Sensor, insbesondere Drucksensor, mit einer Dichtung im Raum zwischen einer Sensor-Einrichtung und einem Gehäuse zum Abdichten des Raums dazwischen gegenüber einem Messbereich mit den oberbegrifflichen Merkmalen des Patentanspruchs 1 bzw. ein Verfahren zum Zusammenbau eines solchen Sensors.

Ein solcher Sensor ist. Z.B. aus DE 42 34 290 A1 bekannt.

Allgemein bekannt sind Sensoren, insbesondere Druck-Sensoren, welche ein Gehäuse mit einer darin eingesetzten Sensor-Einrichtung zum Bestimmen von Parametern in einem Messbereich aufweisen. Der Messbereich ist dabei typischerweise der Innenraum eines Behältnisses, wobei das Behältnis eine Durchgangsöffnung aufweist, durch welche der Sensor so geführt ist, dass die vorderseitige Sensor-Einrichtung in den Innenraum des Behältnisses hineinragt oder mit diesem in Kontakt steht. Um den Innenraum des Sensor-Gehäuses gegenüber einem Medium im Innenraum des Behältnisses abzudichten, ist zwischen einer vorderseitigen Wandung des Gehäuses und der eigentlichen Sensor-Einrichtung eine Dichtung eingesetzt. Übliche Abdichtungen von insbesondere zylinderförmigen Druck-Sensor-Elementen, z. B. aus keramischen Werkstoffen, sind dabei O-Ringe oder Formdichtungen aus Elastomeren.

Bei der Verwendung einer O-Ring-Abdichtung wird z. B. ein Elastomer zwischen zwei parallele Zylinderflächen, d. h. der Innenwandung des Gehäuses des Sensors und der seitlichen Außenwandung der Sensor-Einrichtung, radial eingespannt. Damit der O-Ring unter Unterdruckbedingungen nicht von dem Druck-Sensor-Element als Sensor-Einrichtung zum Messbereich, d. h. Innenraum des Behältnisses, hinweggezogen wird, weist ein solches Gehäuse einen Anschlag für die Dichtung auf. Dadurch, dass die Dichtung durch den Anschlag gegenüber der Sensor-Vorderseite zurückgesetzt wird, bildet sich jedoch ein unerwünschter offener Spalt zwischen der außenseitigen vorderen Wandung der Sensor-Einrichtung und der dieser zugewandten Wandung des gehäuseseitigen Anschlags aus. Der Spalt verhindert, dass dieses Abdichtungskonzept für aseptische Anwendungen, bei denen sich keine Keime absetzen dürfen, eingesetzt werden kann.

Eine Ausgestaltung mit einer Formdichtung ist aus der DE 196 28 551 A1 bekannt.

Bekannte Abdichtungen für aseptische Prozessanschlüsse bzw. Messbereiche werden mit sogenannten Formdichtungen realisiert. Die Formdichtungen sind dabei so gestaltet, dass sich kein Spalt zwischen der Sensor-Einrichtung und dem Gehäuse des Sensors ausbildet, in welchem sich Bakterienkolonien absetzen können. Ein Nachteil besteht dabei jedoch darin, dass diese Formdichtungen bei Temperaturanstieg aufgrund temperaturbedingter Volumenausdehnung aus dem Spalt in den Messbereich hinein extrudieren und sich bei Abkühlung wieder zurückziehen, wodurch der Elastomer zerstört wird. Ein weiterer Nachteil ist durch die jeweilige Verfügbarkeit bestimmter Elastomer-Mischungen für die Dichtungen bedingt. Jede Elastomer-Mischung unterscheidet sich im Schrumpfmaß, weshalb für jede neue Mischung mit einem geänderten Schrumpfverhalten ein eigenes Werkzeug zur Fertigung der speziellen Formdichtung oder entsprechend bei hinsichtlich der dimensionsgenormten Formdichtungen zur Fertigung der Sensor-Komponenten hergestellt werden muss.

Die Aufgabe der Erfindung besteht darin, den Aufbau eines Sensors mit Blick auf die Abdichtung zwischen der eigentlichen Sensor-Einrichtung und dem Gehäuse im Übergangsbereich zum Messbereich zu verbessern. Insbesondere soll für aseptische Zwecke eine Abdichtung eines Druck-Sensor-Elements bereitgestellt werden, welche der Forderung der Spaltfreiheit nachkommt. Außerdem soll die Abdichtung mit einfachen Dichtungen bezweckt werden können.

Diese Aufgabe wird durch einen Sensor, insbesondere einen Drucksensor mit den Merkmalen des Patentanspruchs 1 gelöst. Verfahrensgemäß wird ein solcher Sensor mit den Schritten des Patentanspruchs 11 hergestellt.

Ein besonders bevorzugter Druck-Sensor weist ein Gehäuse auf, in dessen vorderseitigem Abschnitt eine Sensor-Einrichtung mit Hilfe einer Sensor-Einrichtungs-Befestigungseinrichtung befestigt ist, wobei die Sensor-Einrichtung vorderseitig einem Messbereich zugewandt ist, insbesondere mit dem Messbereich bzw. Prozessanschluss kommuniziert. Zwischen einer Umfangswandung der Sensor-Einrichtung und einer innenseitigen Gehäuse-Wandung des Gehäuses ist ein freier Raum ausgebildet, in welchem eine Dichtung zum Abdichten des Innenraums des Sensors gegenüber dem Messbereich eingesetzt ist. Der freie Raum verjüngt sich dabei zur Vorderseite hin konisch, wobei die Dichtung mit Hilfe einer Spanneinrichtung, die hinter der Dichtung angeordnet ist, nach vorne hin, d. h. in Richtung des Messbereichs, in den sich verjüngenden Raum gedrückt wird. Die Wandungen des sich konisch verjüngenden Raums bilden somit ein Widerlager für die Dichtung, so dass die Dichtung nur in einem gewünschten zulässigen Maße in den Messbereich hineinragen kann. Durch diese Anordnung wird mit einfachen Mitteln eine vollständige Abdichtung des Spalts erzielt, wobei auch bei Ausdehnung und Schrumpfung der Dichtung während eines Messprozesses oder in Verbindung mit einem Messprozess eine Beschädigung der Dichtung vermieden wird. Insbesondere kann bei dem Einsatz eines Sensors mit einer zylindrischen Sensor-Einrichtung bei einer solchen Anordnung als Dichtung eine handelsübliche Dichtung als O-Ring-Dichtung eingesetzt werden.

Vorteilhafte Ausgestaltungen sind Gegenstand abhängiger Ansprüche.

Vorteilhafterweise weist die Spanneinrichtung ein Distanzelement auf, welches bei einer besonders bevorzugten Ausführungsform als ein Distanzring ausgebildet ist. Dabei kann das Distanzelement integrales Teil der Spanneinrichtung sein. Bevorzugt wird jedoch ein Distanzelement als eigenständiges Bauelement, da ein solches Distanzelement mit Blick auf die Dimensionierung und die Formung des freien Raums zwischen der seitlichen Wandung der Sensor-Einrichtung und der Innenwandung des Gehäuses, welche den freien Raum ausbilden, angepasst werden kann. Auch je nach verfügbarer Dichtung, insbesondere Material, Dimension und Form der Dichtung, kann ein entsprechend geeignetes Distanzelement verwendet werden, welches zwischen der Spanneinrichtung und der Dichtung eingesetzt wird. Die Spanneinrichtung drückt dann selber oder über das eingesetzte Distanzelement beim Zusammenbau des Sensors gegen die Dichtung, wodurch die Dichtung in den vorderseitigen Bereich des Raums zwischen der Sensor-Einrichtung und dem Gehäuse so weit hineingedrückt wird, dass zur Prozessseite, d. h. zum Messbereich hin, kein Spalt verbleibt, in welchem sich Elemente, insbesondere lebende Zellen, absetzen können.

Neben Ausführungsformen, bei denen sich beide den freien Raum begrenzende Wandungen konisch zur Vorderseite des Sensors hin verjüngen, sind auch Ausführungsformen einsetzbar, bei denen eine der Wandungen, insbesondere die seitliche Umfangswandung der Sensor-Einrichtung nicht verjüngt. Mit Blick auf die Verjüngung sind sowohl geradlinige als auch gebogene Wandungsverläufe einsetzbar.

Vorteilhafterweise werden die Übergänge der Wandungen des Raums zu den entsprechenden vorderseitigen Wandungen zum Prozessbereich hin, d. h. einerseits der Übergang von der seitlichen Wandung der Sensor-Einrichtung zu deren Vorderseite und andererseits die innenseitige Gehäuse-Wandung zur Vorderseite des Gehäuses, derart ausgebildet, dass die Dichtung bei einer Ausdehnung und Schrumpfung nicht beschädigt wird. Dadurch ist der Einsatz des Sensors mit einer Dichtung, welche mit dem Messbereich bzw. Prozessanschluss in Kontakt steht, auch für den Fall möglich, dass während des Prozesses, welcher durch den Sensor überwacht wird, thermische Variationen zulässig sind, durch welche sich die Dichtung und/oder ggfs. Gehäuse-Wandung und Sensor-Einrichtung ausdehnen oder zusammenziehen. Ausgeglichen werden können durch eine solche Anordnung auch Druckänderungen, d. h. beispielsweise ein im Behältnis auftretender Unterdruck, durch welchen die Dichtung in den Messbereich weiter hineingesaugt wird, als sie bei einem Normaldruck aus dem freien Raum zwischen den Wandungen der Sensor-Einrichtung und des Gehäuses herausragen würde. Entsprechend können auch Überdrücke ausgeglichen werden, indem die Dichtung bei Normaldruck übermäßig weit in den Messbereich hineinragt und bei Anlegen eines Überdrucks nur noch bis zu einem gewünschten Maß in den Messbereich hineinragt.

Die Übergänge von den Wandungen, die den freien Raum mit der Dichtung ausbilden, zu den entsprechenden Vorderseiten hin sind entsprechend vorteilhafterweise gerundet ausgebildet. Vorteilhaft ist dabei auch ein Öffnungswinkel der beiden vorderseitigen Wandungen vom vorderen Ende des freien Raums aus, welcher weniger als 180° beträgt, insbesondere weniger als 170°. Gemäß ersten Betrachtungen erscheint der zum Messbereich ausgebildete Winkel zwischen dem aus dem Raum ragenden Abschnitt der Dichtung und der vorderseitigen Wandung der Sensor-Einrichtung bzw. des Gehäuses vorteilhafterweise größer als 90°, insbesondere größer als 100°.

Verfahrensgemäß wird somit vorteilhafterweise beim Zusammenbau eines Sensors in dem vorderseitigen Gehäuse-Abschnitt eine Sensor-Einrichtung derart angeordnet, dass zwischen der seitlichen Wandung der Sensor-Einrichtung und der innenseitigen Wandung des Gehäuses ein freier Raum verbleibt, welcher zur Vorderseite hin sich konisch verjüngende zuläuft. In diesen freien Raum wird ein O-Ring eingesetzt, welche nachfolgend mit Hilfe einer Spanneinrichtung zum Prozessanschluss hin, d.h. zum vorderseitigen Messbereich hin gedrückt bzw. gequetscht wird. Die Spanneinrichtung kann dabei zweckmäßigerweise zugleich zur Befestigung der Sensor-Einrichtung, insbesondere eines Druck-Sensor-Elementes unter Ausbildung eines rückseitigen Widerlagers ausgebildet sein.

Der derart zusammengebaute Sensor wird dann in eine Behältnis-Öffnung eingeschraubt, um einen entsprechenden Parameter auf der Prozessseite zu bestimmen.

Ein Ausführungsbeispiel wird nachfolgend anhand der Zeichnung näher erläutert. Es zeigen:
- Fig. 1: eine Teilschnitt-Darstellung durch den vorderseitigen Abschnitt eines Sensors, welcher in einer Behältnis-Wandung eingesetzt ist und
- Fig. 2: einen vergrößerten Ausschnitt des Übergangsbereichs einer Sensor-Einrichtung zu einer Gehäuse-Wandung mit einer dazwischen eingesetzten Dichtung.

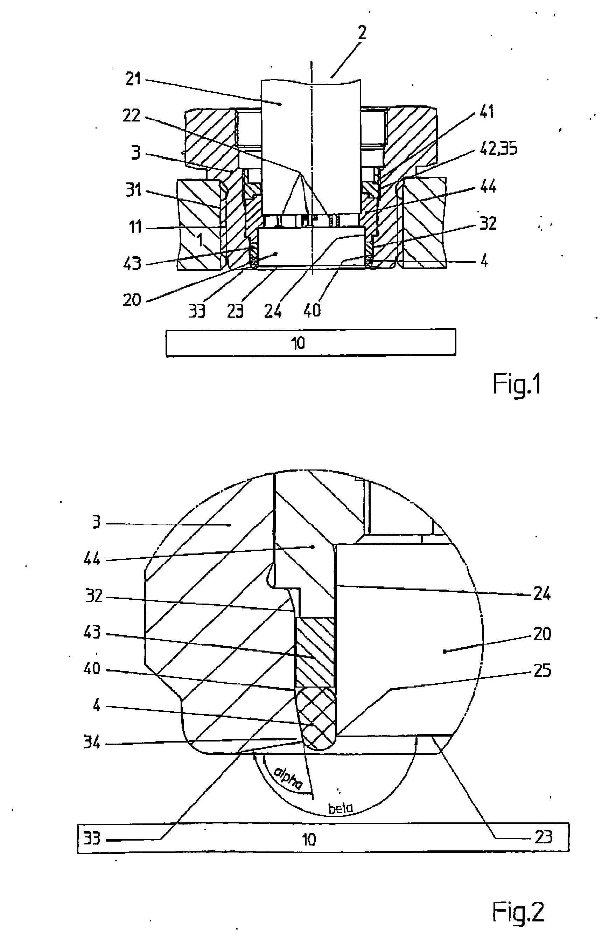

Wie dies aus Fig. 1 ersichtlich ist, ist in der Wandung eines Behältnisses 1 ein Sensor 2 über dessen Gehäuse 3 eingesetzt. Zur Verbindung des dargestellten Gehäuses 3 und der Wandung des Behältnisses 1 dient beispielsweise eine Gewindeverbindung aus einem Gehäuse-Gewinde 31 und einem Behältnis-Gewinde 11, welche ineinander eingreifen, wie dies für sich genommen bekannt ist.

Der Sensor 2 besteht aus einer Vielzahl von Einzelkomponenten, von denen nachfolgend im Wesentlichen nur mit Blick auf das Verständnis des Ausführungsbeispiels erforderliche Komponenten aufgeführt werden.

Im vorderseitigen Bereich des Gehäuses 3 befindet sich eine Aufnahme, in welcher eine eigentliche Sensor-Einrichtung 20, insbesondere ein Druck-Sensor-Element, eingesetzt ist. Die Sensor-Einrichtung 20 ist bei dem dargestellten Ausführungsbeispiel mit einer rückseitig im Gehäuse 3 angeordneten Sensor-Elektronik 21 über Verbindungseinrichtungen 22 verbunden.

Die Verbindungseinrichtungen 22 können dabei mechanische Verbindungs- und Halterungselemente sein, weisen vorzugsweise aber auch elektrische Verbindungen zur Stromversorgung und/oder Signal-Übertragung und Druck-Ausgleichsleitungen und dgl. auf. Die Vorderseite 23 der Sensor-Einrichtung 20 kommuniziert mit der Prozessseite bzw. dem Messbereich 10 des Behältnisses. Die Begriffe vorderseitig und rückseitig dienen im Wesentlichen lediglich zur anschaulichen Beschreibung der Anordnung und Ausrichtung einzelner Komponenten des Sensors 2.

Zwischen einer seitlichen Wandung, insbesondere Umfangswandung 24 der Sensor-Einrichtung 20 und einer dieser gegenüberliegenden innenseitigen Gehäuse-Wandung 32 ist ein freier Raum 40 ausgebildet. Eine oder beide dieser gegenüberliegenden Wandungen 24, 32 der Sensor-Einrichtung 20 bzw. des Gehäuses 3 sind dabei zur Vorderseite hin derart ausgestaltet, dass sich der Querschnitt durch den vorderseitigen Raum 40 zur Vorderseite hin konisch verjüngt.

In dem vorderseitigen Abschnitt des freien Raums 40 ist eine Dichtung 4 eingesetzt, vorteilhafterweise eine handelsübliche Dichtung aus einem Elastomer, welche bei einem zylindrischen Aufbau des Sensors 2 oder zumindest der Sensor-Einrichtung 20 ein handelsüblicher Rundschnurdichtring bzw. handelsüblicher O-Ring sein kann. Als Werkstoff der Dichtung 4 kann ein Elastomer vorgesehen sein, welcher unterschiedliche temperaturbedingte oder druckbedingte Ausdehnungen elastisch ausgleicht, um Spannungen und dadurch bedingte Messwertverfälschungen zu verhindern. Um den Sensor für aseptische Anwendungen verwenden zu können, wird die Dichtung dabei so weit in Richtung der Vorderseite gedrückt, dass kein freier Spalt zur Seite des Messbereichs hin verbleibt. Weder zwischen der Vorderseite der Dichtung 4 und der Vorderseite 23 der Sensor-Einrichtung 20 noch zwischen der Dichtung 4 und der Vorderseite 33 des Gehäuses 3 verbleibt bei der bevorzugten Ausführungsform ein Spalt.

Um die Dichtung 4 in die richtige Position zu bringen, d. h. in dem freien Raum 40 ausreichend weit nach vorne zu drücken, dient eine Spanneinrichtung, welche als eigenständiges Spannelement ausgebildet sein kann und lediglich zum Vorspannen der Dichtung 4 dient.

Bei der dargestellten Ausführungsform besteht die Spanneinrichtung aus mehreren Komponenten und dient zugleich auch zur Verspannung weiterer Sensor-Komponenten. Die Spanneinrichtung 41 weist ein seitliches Gewinde 42 auf, welches mit einem Innengewinde 35 des Gehäuses in Eingriff steht, um die Spanneinrichtung 41 relativ zur innenseitigen Wandung des Gehäuses 3 vor bzw. zurück bewegen und spannen zu können. Zumindest ein Abschnitt der Vorderseite der Spanneinrichtung 41 drückt gegen ein Distanzelement 43, bei der dargestellten zylindrischen Ausführungsform des Sensors 2 gegen einen Distanzring. Dieses Distanzelement 43 und ggfs. ein vorderseitiger Abschnitt der Aufnahmering 44 ragen in den freien Raum 40 hinein. Mit der Vorderseite drückt das Distanzelement 43 gegen die Rückseite der Dichtung 4. Durch das Vorwärtsspannen der Spanneinrichtung 41 gegenüber dem Gehäuse 3 wird somit das Distanzelement 43 und darüber die Dichtung 4 nach vorne in den Raum 40 und bei entsprechendem Vorwärtsbewegen bzw. Spanndruck durch den nach vorne teilweise noch offenen Raum 40 in den Messbereich 10 gedrückt. Bei der dargestellten Ausführungsform dient die Spanneinrichtung 41 zugleich auch zum Ausbilden eines Widerlagers für die Sensor-Einrichtung 20 in rückwärtiger Richtung. Möglich ist auch eine feste Verbindung mit der Sensor-Einrichtung 20, so dass die Spanneinrichtung 41 eine Komponente mit einer Sensor-Einrichtungs-Befestigungseinrichtung ausbildet. Bei der dargestellten Ausführungsform ist entsprechend ein Aufnahmering 44 als weiteres Element zwischen die als Druckschraube ausgebildete Spanneinrichtung 41 und das Distanzelement 43 gesetzt.

Wie dies auf den Fig. 2 ersichtlich ist, können der freie Raum bzw. die Übergänge zu den Vorderseiten 23, 33 zu der Sensor-Einrichtung 20 bzw. dem Gehäuse 3 in vielfältiger Art und Weise ausgebildet sein, wobei auch weitere Ausführungsformen umsetzbar sind.

Wie dies insbesondere anhand Fig. 2 ersichtlich ist, wird die Dichtung 4 durch die Spanneinrichtung 41, den Aufnahmering 44 und letztendlich das Distanzelement 43 so weit nach vorne in den Raum 40 gedrückt, dass die Dichtung 4 vorderseitig leicht in den Prozessanschluss bzw. Messbereich hineinragt bzw. hineinquillt.

Gemäß bevorzugten Ausführungsformen wird dabei der Übergang von der Vorderseite 23 der Sensor-Einrichtung 20 bzw. der Vorderseite 33 des Gehäuses 3 zu der Oberfläche der Dichtung 4 als radialer Übergang gewählt.

Bei bevorzugten Ausführungsformen beträgt der Öffnungswinkel bzw. Übergangswinkel β von der Vorderseite 23 der Sensor-Einrichtung 20 zur Vorderseite 33 des Gehäuses 3 vorteilhafterweise weniger als 180°, insbesondere weniger als 170°, um die Sensoreinrichtung gegen mechanische Schäden beim Ein- und Ausbau zu schützen.

Beim Zusammenbau werden die einzelnen Elemente des Sensors 2 in im Wesentlichen für sich bekannter Art und Weise zusammengesetzt. In der vorderseitigen Öffnung des Gehäuses 3 wird dann dabei die Sensor-Einrichtung 20 so eingesetzt, dass zwischen der seitlichen Umfangswandung 24 der Sensor-Einrichtung 20 und der innenseitigen Gehäuse-Wandung 32 des Gehäuses 3 der Raum 40 verbleibt, welcher zu der Vorderseite bzw. Prozessseite 10 hin sich konisch verjüngend zuläuft. In diesen Raum wird die Dichtung 4 eingesetzt, welche nachfolgend mit Hilfe einer Spanneinrichtung nach vorne gedrückt wird, bis sie vorzugsweise leicht aus dem verbliebenen Spalt in den Messbereich 10 hineinsteht. Bei der bevorzugten Verfahrensweise wird die Dichtung 4 mit Hilfe eines Distanzelements 43 vorwärts gedrückt, wobei das Distanzelement in den Raum 40 hineinragt und selber mit Hilfe der Spanneinrichtung vorgedrückt wird.

Zur Aufnahme des Distanzelements 43 und einer als insbesondere herkömmlicher O-Ring ausgebildeten Dichtung wird der Raum 40 bei dieser Ausführungsform und Verfahrensweise vorteilhafterweise sogar breiter als bei für sich bekannten Anordnungen ausgebildet. Auch Ungenauigkeiten bei der Dimensionierung können durch die geeignete Wahl eines passenden Distanzelements 43 und einer passenden Dichtung 4 problemlos ausgeglichen werden.

Bei der dargestellten bevorzugten Ausführungsform wird somit ein kreisrunder Dichtring in den Raum 40 eingesetzt und darin mit Hilfe des Distanzelements 43 so umgeformt, dass der verbleibende Spalt bzw. Raum 43 zwischen dem Druck-Sensor-Element als Sensor-Einrichtung 20 und dem Sensor-Gehäuse 3 ausgefüllt wird, wobei der kreisrunde Dichtring als Dichtung 4 zwischen dem zylinderförmigen Umfang des Druck-Sensor-Elements und einer Konusfläche 32 als innenseitige Gehäuse-Wandung oder eigenständiges Bauelement am Sensor-Gehäuse 3 mit der Befestigung 41 der Sensor-Einrichtung eingequetscht wird. Dabei wird der Dichtring von der Mediumseite bzw. Vorderseite der Sensor-Einrichtung 20 so weit vorgesetzt, dass die Abdichtung innerhalb der tangentialen Planfläche der Dichtung 4 stattfindet.

Vorteilhafterweise kann die ringförmige Dichtung auch für aseptische Anwendungen bei großen Temperaturdifferenzen eingesetzt werden, da die Dichtung 4 sich aus dem Spalt bzw. Raum 40 ohne Zerstörung nach außen ausdehnen und sich zurückbilden kann.

Im Gegensatz zur für sich bekannten Anordnung muss die Dichtung 4 auch für Anwendungen mit einem Unterdruck im Prozessanschluss nicht durch einen Absatz zurückgehalten werden, da die Dichtung 4 durch den zwischen Sensor-Einrichtung und Sensor-Gehäuse zum Medium hin enger werdenden Spalt bzw. Raum 40 zurückgehalten wird.

Für die Werkstoff-Auswahl des Dichtrings muss auch kein kundenspezifisches Werkzeug beschafft werden, da eine kostengünstige handelsübliche Dichtung, insbesondere ein O-Ring, verwendbar ist.

### Bezugszeichenliste:

- 1: Behältnis
- 10: Messbereich / Prozessanschluss
- 11: Behältnisbefestigung z.B Gewinde
- 2: Sensor
- 20: Sensor-Einrichtung / Druck-Sensor-Element
- 21: Sensor-Elektronik
- 22: Verbindungeinrichtung
- 23: Vorderseite von 20
- 24: Umfangswandung von 20
- 25: Übergangsbereich 23 - 24
- 3: Gehäuse
- 31: Gehäuse-Gewinde
- 32: innenseitige Gehäuse-Wandung
- 33: Vorderseite von 3
- 34: Übergang 32 - 33
- 35: Gehäuse-Gewinde für 41, 42
- 4: Dichtung
- 40: Raum / Spalt zwischen 24, 32, 10, 43
- 41: Spanneinrichtung
- 42: Gewinde von 41
- 43: Distanzelement
- 44: Aufnahmering

## Patentansprüche

1. Sensor (2), insbesondere Drucksensor, mit
- einer Sensor-Einrichtung (20) zur Messwerterfassung
- einem Gehäuse (3),
- einer Sensor-Einrichtungs-Befestigungseinrichtung (42) zum Befestigen der Sensor-Einrichtung (20) im vorderseitigen Bereich des Gehäuses (3),
- einem Raum (40) zwischen einer Umfangswandung (24) der Sensor-Einrichtung (20) und einer innenseitigen Wandung (32) des Gehäuses (3) und
- einer Dichtung (4) im Raum (40) zwischen der Sensor-Einrichtung (20) und dem Gehäuse (3) zum Abdichten des Raums (40) gegenüber dem Messbereich (10), wobei
- der Raum (40) zur Vorderseite hin konisch verjüngt ausgebildet ist,
- eine Spanneinrichtung (41, 43) rückseitig der Dichtung (4) angeordnet ist und die Dichtung (4) nach vorne in den verjüngenden Raum (40) drückt und
- die Dichtung (4) ein O-Ring ist, die durch die Spanneinrichtung (41, 42) derart umgeformt wird, dass sie den Raum (40) spaltfrei ausfüllt,
**dadurch gekennzeichnet, dass** ein Öffnungswinkel (β) zwischen einer Vorderseite (23) der Sensor-Einrichtung (20) und einer Vorderseite (33) des Gehäuses (3) kleiner 180' ist, insbesondere kleiner 170° ist.

2. Sensor nach Anspruch 1, bei dem die Spanneinrichtung (41, 43) ein Distanzelement (43) aufweist, insbesondere einen Distanzring aufweist.

3. Sensor nach Anspruch 2, bei dem die Spanneinrichtung (41) zum Drücken des Distanzelements (43) beim Zusammenbau des Sensors (2) gegen die Dichtung (4) ausgebildet ist.

4. Sensor nach einem vorstehenden Anspruch, bei dem die Spanneinrichtung (41) und/oder das Distanzelement (43) dem Verlauf der Umfangswandung (24, 32) der Sensor-Einrichtung (24) und der Gehäuse-Wandung (32) in dem Raum (40) entsprechend geformt ist.

5. Sensor nach einem vorstehenden Anspruch, bei dem zumindest S eine der Wandungen (24, 32) des sich konisch verjüngenden Raums (40) sich derart verjüngend ausgebildet ist, dass diese für die Dichtung (4) als Widerlager in vorderseitiger Richtung ausgebildet ist.

6. Sensor nach einem vorstehenden Anspruch, bei dem der Raum (40) vorderseitig offen ausgebildet ist und die Übergänge von den Wandungen, die den Raum (40) mit der Dichtung (4) ausbilden, zu den entsprechenden Vorderseiten hin gerundet ausgebildet sind.

7. Sensor nach einem vorstehenden Anspruch, bei dem die Dichtung (4) vorderseitig teilweise aus dem Raum (40) in den Messbereich (10) ragt, insbesondere gedrückt wird.

8. Sensor nach Anspruch 7, bei dem der zum Messbereich (10) ausgebildete Winkel (α) zwischen dem aus dem Raum (40) ragenden Abschnitt der Dichtung (4) und der vorderseitigen Wandung (23, 33) der Sensor-Einrichtung (20) und/oder des Gehäuses (3) größer 90° ist, insbesondere größer 100° ist.

## Claims

1. A sensor (2), in particular a pressure sensor, with
- a sensor device (20) detecting the measurement value,
- a casing (3),
- a sensor-device fastening device (42) for fastening the sensor device (20) in the front region of the casing (3),
- a space (40) between a peripheral wall (24) of the sensor device (20) and a wall (32) of the casing (3) towards the inside, and
- a seal (4) in the space (40) between the sensor device (20) and the casing (3) for sealing off the space (40) with respect to the measurement region (10), wherein
- the space (40) is made conically tapered towards the front side,
- a clamping device (41, 43) is arranged at the rear side of the seal (4) and presses the seal (4) forwards into the tapered space (40) and
- the seal (4) is an O-ring which is shaped by the clamping device (41, 42) in such a way that it fills the space (40) in a manner free of gaps,
**characterized in that**
an opening angle (β) between a front side (23) of the sensor device (20) and a front side (33) of the casing (3) is less than 180°, and in particular less than 170°.

2. A sensor according to claim 1, in which the clamping device (41, 43) has a spacer element (43), in particular a spacer ring.

3. A sensor according to claim 2, in which the clamping device (41) is designed for pressing the spacer element (43) against the seal (4) during the assembly of the sensor (2).

4. A sensor according to any preceding claim, in which the clamping device (41) and/or the spacer element (43) is or are shaped corresponding to the course of the peripheral wall (24, 32) of the sensor device (24) and the housing wall (32) in the space (40).

5. A sensor according to any preceding claim, in which at least one of the walls (24, 32) of the conically tapering space (40) is made tapering in such a way that it is designed as an abutment for the seal (4) in the direction towards the front side.

6. A sensor according to any preceding claim, in which the space (40) is made open towards the front side and the transitions from the walls which form the space (40) with the seal (4) are rounded towards the corresponding front sides.

7. A sensor according to any preceding claim, in which on the front side the seal (4) projects, and in particular is pressed, in part out of the space (40) into the measurement area (10).

8. A sensor according to claim 7, in which the angle (α) formed with respect to the measurement area (10) between the portion of the seal (4) projecting out of the space (40) and the wall (23, 33) of the sensor device (20) and/or the casing (3) on the front side is greater than 90°, and in particular greater than 100°.

## Revendications

1. Capteur (2), notamment capteur de pression comprenant :
- une installation de capteur (20) pour saisir des mesures,
- un boîtier (3),
- une installation de fixation (42) pour fixer l'installation de capteur (20) dans la zone frontale du boîtier (3),
- un volume (40) entre la paroi périphérique (24) de l'installation de capteur (20) et la paroi côté intérieur (32) du boîtier (3), et
- un joint (4) dans le volume (40) entre l'installation de capteur (20) et le boîtier (3) pour réaliser l'étanchéité du volume (40) par rapport à la zone de mesure (10),
dans lequel
- le volume (40) diminue suivant une forme conique vers le côté avant,
- une installation de serrage (41, 43) est prévue au dos du joint (4) et le joint (4) pousse vers l'avant dans l'espace rétréci (40), et
- le joint (4) est un joint torique déformé par l'installation de serrage (41, 42) pour remplir le volume (40) sans laisser d'intervalle,
capteur **caractérisé en ce que**
l'angle d'ouverture (β) entre la face avant (23) de l'installation de capteur (20) et la face avant (33) du boîtier (3), est inférieur à 180° et notamment inférieur à 170°.

2. Capteur selon la revendication 1,
**caractérisé en ce que**
l'installation de serrage (41, 43) comporte un élément d'écartement (43), notamment une bague d'écartement.

3. Capteur selon la revendication 2,
**caractérisé en ce que**
l'installation de serrage (41) est réalisée pour pousser l'élément d'écartement (43) contre le joint (4) lors de l'assemblage du capteur (2).

4. Capteur selon l'une des revendications précédentes,
**caractérisé en ce que**
l'installation de serrage (41) et/ ou l'élément d'écartement (43) sont formés suivant le tracé de la paroi périphérique (24, 32) de l'installation de capteur (24) et de la paroi (32) du boîtier dans le volume (40).

5. Capteur selon l'une des revendications précédentes,
**caractérisé en ce qu'**
au moins l'une des parois (24, 32) de l'espace (40) qui diminue suivant une forme conique est réalisée de façon à diminuer pour constituer un appui pour le joint (4) en direction du côté avant.

6. Capteur selon l'une des revendications précédentes,
**caractérisé en ce que**
le volume (40) est ouvert sur le côté avant et les transitions entre les parois qui forment le volume (40) avec le joint (4), sont réalisées de manière arrondie vers les côtés avant respectifs.

7. Capteur selon l'une des revendications précédentes,
**caractérisé en ce que**
le côté avant du joint (4) dépasse en partie du volume (40) dans la zone de mesure (10) en y étant notamment poussé.

8. Capteur selon la revendication 7,
**caractérisé en ce que**
l'angle (α) formé vers la zone de mesure (10) entre le segment du joint (4) dépassant du volume (40) et la paroi avant (23, 33) de l'installation de capteur (20) et/ou du boîtier (3), est supérieur à 90° et notamment supérieur à 100°.
